# FASCICULE DE BREVET EUROPEEN

(11) **EP 1 668 272 B1**
(45) Date de publication et mention de la délivrance du brevet: **09.05.2012**
(21) Numéro de dépôt: 04817106.0
(22) Date de dépôt: 29.09.2004
(51) Int. Cl.: F16F 15/315

(54) **VOLANT FLEXIBLE D'UN DISPOSITIF DE TRANSMISSION DE COUPLE, EN PARTICULIER POUR VEHICULE AUTOMOBILE**
FLEXIBLES SCHWUNGRAD FÜR EINE DREHMOMENTÜBERTRAGUNGSVORRICHTUNG, INSBESONDERE FÜR EIN KRAFTFAHRZEUG
FLEXIBLE FLYWHEEL FOR A TORQUE-TRANSMITTING DEVICE, PARTICULARLY FOR A MOTOR VEHICLE

(30) Priorité: 01.10.2003 FR 0350633
(43) Date de publication de la demande: 14.06.2006
(73) Titulaire: Valeo Embrayages, 80009 Amiens Cedex 1 (FR)
(72) Inventeur: FENIOUX, Daniel, F-80480 Saleux (FR); KLOSSEK, Robert, F-80000 Amiens (FR); MAINGAUD, Daniel, F-80250 Rouvrel (FR); VERHOOG, Roel, F-60190 Gourney Sur Aronde (FR)
(74) Mandataire: Jeuland, Mickaël
(86) Numéro de dépôt international: PCT/FR2004/050472
(87) Numéro de publication internationale: WO 2005/033550

(56) Documents cités:
- EP-A- 1 108 483
- DE-A- 10 058 884
- DE-A- 19 721 236
- DE-A- 19 959 962
- FR-A- 2 735 829
- FR-A- 2 812 703
- US-A- 5 366 054
- US-A- 5 465 635
- US-A- 5 768 949

## Description

L'invention concerne un voltant flexible dans un dispositif de transmission de couple en particulier pour véhicule automobile, tel notamment qu'un volant d'embrayage, un volant primaire de double volant amortisseur ou un volant d'entraînement d'un convertisseur de couple

De façon connue, un volant axialement flexible comprend une tôle annulaire flexible fixée à sa périphérie interne sur un arbre moteur, par exemple sur un vilebrequin d'un moteur à combustion interne, et portant à sa périphérie externe une masse annulaire d'inertie. La tôle précitée est flexible en direction axiale et rigide dans le sens circonférentiel, pour l'absorption des vibrations transmises par l'arbre moteur et pour la transmission d'un couple au volant d'inertie. Le document DE-A-19959962 décrit une tôle annulaire flexible de ce type, qui est d'épaisseur constante.

Il est connu de fabriquer la tôle annulaire flexible par emboutissage. Cependant ce procédé ne permet pas d'obtenir des tôles annulaires flexibles ayant un rapport fonctionnalité/coût de revient très élevé. En effet, les méthodes d'emboutissage traditionnelles nécessitent de nombreuses manipulation de la tôle annulaire et des reprises d'usinage pour donner une forme finale et des caractéristiques techniques souhaitées à la tôle annulaire. De plus, et pour supporter des contraintes mécaniques importantes, il est nécessaire d'effectuer un ou plusieurs traitements thermiques de la tôle flexible. L'ensemble des opérations nécessaires pour obtenir une tôle annulaire flexible par emboutissage est donc coûteux.

En outre, l'emboutissage ne permet pas de réaliser des tôles flexibles avec des variations d'épaisseurs importantes permettant d'intégrer différentes caractéristiques techniques autres que celles en rapport à la flexion. Par exemple, l'emboutissage ne permet pas d'obtenir des pièces ayant des zones de faibles épaisseurs pour répondre aux exigences de flexion et des zones plus épaisses, plus rigides en flexion que les zones de faibles, épaisseurs et élastiquement déformables en compression, pour répartir de manière homogène et à l'intérieur de la tôle annulaire flexible des efforts de serrage appliqués par des vis ou encore pour former par exemple une couronne de démarrage.

Un autre inconvénient résultant de l'épaisseur constante des tôles annulaires flexibles embouties est de ne pas pouvoir obtenir de zones spécifiques de flexion au sein de la tôle annulaire flexible.

En effet, l'absence de zones spécifiques de flexion ne permet pas de trouver un compromis efficace entre une durée de vie importante et une souplesse accrue de la tôle flexible. La durée de vie de la tôle peut, par exemple, être diminuée par des phénomènes de corrosion par frottements (fretting) qui ont lieu entre la tôle annulaire flexible et des pièces qui lui sont fixées telles, par exemple, que la masse annulaire d'inertie. Les frottements entre pièces sont dus à la tôle annulaire flexible qui d'épaisseur constante est amenée à se déformer dans son ensemble lors de ses mouvements de flexions induits par des vibrations de flexion de l'arbre moteur, qui sont des oscillations selon un axe perpendiculaire à l'axe de l'arbre moteur. Les pièces fixées sur la tôle flexible seront par conséquent tantôt en contact avec la tôle et tantôt éloignées de celle-ci, et ces mouvements sont accompagnés de frottements qui provoquent une usure accélérée de la tôle annulaire flexible.

De plus, l'absence de zones spécifiques de flexion ne permet pas d'optimiser les caractéristiques de flexion de la tôle annulaire flexible, c'est-à-dire obtenir une raideur et une déformation élastique optimales et/ou de faire varier ces caractéristiques progressivement le long d'un rayon de la tôle annulaire, tout en garantissant une durée de vie longue.

Pour éviter les inconvénients précités, il a été proposé de fabriquer ces tôles par des techniques d'usinage classiques. L'avantage de ces techniques est de pouvoir réaliser des tôles flexibles comportant des caractéristiques techniques additionnelles telles que par exemple des surépaisseurs pour supporter des efforts de serrages importants. L'usinage permet en outre de maîtriser plus facilement les caractéristiques de flexion (amplitude de déformation, raideur et amortissement des mouvements de flexion) de la tôle en créant des zones de flexion pour lesquelles l'épaisseur de la tôle est plus fine.

Cependant les procédés d'usinage, mêmes classiques, sont plus coûteux que les techniques de déformation plastique car ils nécessitent plusieurs repositionnements de la tôle à usiner et parce qu'il produisent également une quantité importante de copeaux d'où des pertes de matière importantes.

Pour atteindre les caractéristiques mécaniques indispensables à leur utilisation, les tôles annulaires flexibles doivent subir après les étapes d'usinage une ou plusieurs étapes de traitements thermiques longues et coûteuses.

En outre, l'usinage d'une tôle flexible ne permet pas d'obtenir des variations d'épaisseurs très progressives, créant par conséquent des concentrations de contraintes qui fragilisent la tôle flexible. Une caractéristique inhérente des procédés d'usinage est de couper les fibres constitutives des matériaux, de sorte que les tôles flexibles fabriquées par usinage sont plus fragiles et résistent plus difficilement aux déformations élastiques que des tôles flexibles fabriquées par des procédés ne faisant que déformer les fibres constitutives des matériaux tels que des procédés d'emboutissage.

La présente invention a notamment pour but d'apporter une solution simple, efficace et économique à ces problèmes.

L'invention propose à cet effet un volant flexible pour un dispositif de transmission de couple, en particulier pour véhicule automobile, ce volant comprenant une masse annulaire portée par une partie radialement externe d'une tôle annulaire flexible dont une partie radialement interne comporte des trous de passage de vis de fixation sur l'arbre moteur, caractérisé en ce que la tôle annulaire flexible est une pièce réalisée par fluotournage et a une épaisseur variable en direction radiale.

Le fluotournage permet de réaliser à moindre coût une tôle flexible annulaire dont les caractéristiques de flexion peuvent facilement être optimisées en fonction des conditions d'utilisation du volant flexible, Le fluotournage est une déformation plastique de la matière, de sorte qu'il n'y a pas de pertes de matière lors de la formation de la tôle annulaire flexible. En outre, les fibres constitutives de la pièce ne sont pas coupées d'où une résistance à la fatigue accrue et une plus longue durée de vie de la tôle annulaire soumise à des mouvements de flexion.

Le fluotournage peut être appliqué à des pièces de matériaux très durs n'ayant pas besoin de subir un traitement thermique ultérieur. En outre, les techniques de fluotournage mettent en oeuvre de très fortes pressions qui appliquées sur une pièce, pour la déformer et obtenir une géométrie finale, provoquent un écrouissage qui augmente en surface la dureté des tôles annulaires. Les tôles flexibles obtenues par fluotournage n'ont donc pas besoin de subir de traitements thermiques pour améliorer leurs caractéristiques mécaniques.

Le fluotournage permet d'obtenir un très bon état de surface des tôles annulaires flexibles, il n'est donc pas utile de reprendre en usinage les surfaces fonctionnelles de la tôle.

Le fluotournage permet également d'obtenir des tôles flexibles de formes diversifiées dont les parois ont des épaisseurs variables dans une direction radiale, de sorte qu'il est possible de créer au sein de la tôle flexible des zones annulaires de faibles épaisseurs qui sont destinées à être sollicitées en flexion et des zones annulaires de fortes épaisseurs rigides en flexion mais plus élastiques en compression que les zones de faibles épaisseurs.

A cet effet et selon une autre caractéristique de l'invention, une zone annulaire de faible épaisseur destinée à la flexion est formée entre la partie radialement interne et la partie radialement externe de la tôle flexible. Cette zone annulaire flexible a de façon générale une épaisseur variable comprise entre 1 et 5 mm environ, et de préférence entre 2 et 4mm.

Dans un mode de réalisation préféré, la zone annulaire flexible a une épaisseur croissante depuis sa périphérie radialement externe vers sa périphérie radialement interne.

Les zones annulaires de fortes épaisseurs permettent, par exemple, de répartir facilement à travers la matière constitutive de la tôle annulaire flexible, sans concentration de contraintes, des efforts de serrage très importants exercés par des têtes de vis. De ce fait, la partie annulaire radialement interne de la tôle annulaire selon l'invention est plus épaisse que la zone annulaire intermédiaire de flexion pour former une cale annulaire de support des vis de fixation sur l'arbre moteur. L'épaisseur de la tôle annulaire flexible au niveau de la cale annulaire de serrage est de préférence comprise entre 5 et 10 mm environ.

Les zones plus épaisses rigides en flexion et destinées notamment à la fixation de pièces telles, par exemple, qu'une masse annulaire, permettent également de garantir un contact permanent entre la tôle flexible et les pièces qui lui sont fixées, et par conséquent, permet d'éviter des phénomènes de corrosion par frottements (fretting) qui provoqueraient une usure accélérée de la tôle annulaire flexible. L'augmentation de l'épaisseur de la zone périphérique externe permet aussi d'augmenter l'inertie du volant flexible.

Le fluotournage permet, en outre, une meilleure répartition des masses en fonction, par exemple, des différentes contraintes mécaniques s'exerçant sur la tôle annulaire flexible et, par conséquent, d'économiser au mieux la matière nécessaire pour former la tôle annulaire flexible.

Selon une autre caractéristique de l'invention, une couronne dentée de démarreur est formée par usinage de la périphérie radialement externe de la tôle annulaire flexible, et un rebord périphérique cylindrique de la tôle annulaire flexible est formé par fluotournage avec des cibles d'allumage. Seul le fluotournage permet d'intégrer facilement en une seule pièce la couronne de cibles d'allumage à la tôle annulaire flexible.

Le fluotournage permet, par conséquent, de fabriquer un volant flexible ne comportant que deux composants, une tôle annulaire regroupant plusieurs fonctions techniques et une masse d'inertie qui peut être de manière connue fabriquée en un ou plusieurs éléments.

Dans une variante de réalisation, une couronne de démarreur indépendante est fixée sur la périphérie radialement externe de la tôle annulaire flexible et la partie de la tôle annulaire flexible portant la couronne de démarreur a de préférence une épaisseur d'environ 2 mm sous les têtes des rivets de fixation.

Selon d'autres caractéristiques de l'invention, les tôles annulaires flexibles obtenues par fluotournage ont des épaisseurs qui varient de façon progressive dans les zones de flexion et de grands rayons de raccordement entre zones de flexions de faibles épaisseurs et zones de fortes épaisseurs pour éviter les concentrations de contraintes à l'intérieur de la matière lors des mouvements de flexion de la tôle annulaire et pour ainsi créer des zones de flexion ayant une très bonne résistance à la fatigue.
Selon d'autres caractéristiques de l'invention :
- la partie de la tôle formant la couronne de démarreur a de préférence une épaisseur d'environ 10 mm,
- la partie de la tôle flexible portant la masse annulaire a de préférence une épaisseur d'environ 2 à 4 mm,
- la masse annulaire est fixée par rivetage sur la tôle annulaire flexible.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :
- la figure 1 est une vue schématique en coupe axiale d'un premier mode de réalisation du volant flexible selon l'invention ;
- la figure 2 est une vue schématique en coupe axiale d'une variante du premier mode de réalisation du volant flexible selon l'invention ;
- la figure 3 est une vue schématique en coupe axiale d'un deuxième mode de réalisation du volant flexible selon l'invention ;
- la figure 4 est une vue schématique en perspective du mode de réalisation représenté en figure 2 ;
- la figure 5 est une vue schématique en coupe axiale d'un troisième mode de réalisation du volant flexible selon l'invention ;
- la figure 6 est une vue schématique en perspective du mode de réalisation représenté en figure 4 ;
- la figure 7 est une vue schématique en perspective d'un autre mode de réalisation ;
- les figures 8 à 10 représentent respectivement trois étapes successives de réalisation par fluotournage d'une tôle annulaire flexible.

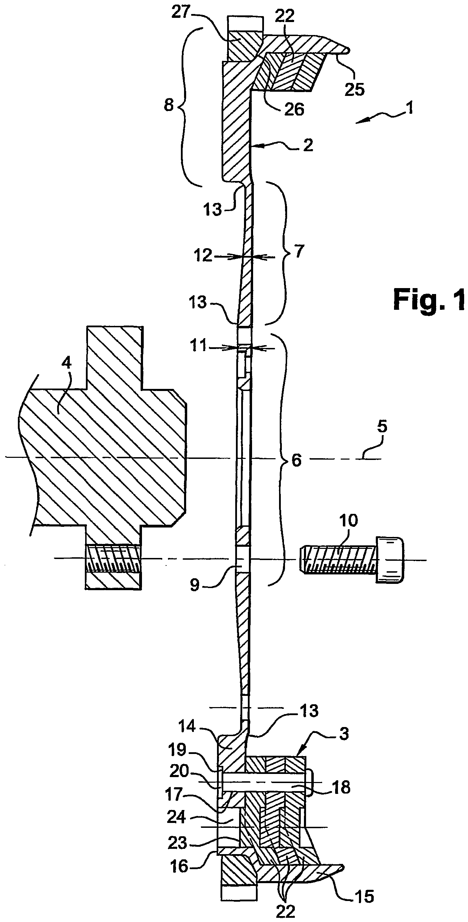

On se réfère d'abord à la figure 1 qui représente un volant flexible destiné à être fixé en bout d'un arbre moteur et centré sur l'axe de rotation de cet arbre moteur. Le volant flexible 1 comporte une tôle annulaire flexible 2 d'épaisseur variable et une masse annulaire d'inertie 3 fixée sur la tôle annulaire flexible 2, du côté opposé à l'arbre moteur 4, et centrée sur l'axe de rotation 4. La tôle annulaire flexible 2 comporte trois parties annulaires coaxiales 6, 7, 8 : une partie radialement externe 8, une partie radialement interne 6 et une partie intermédiaire 7 entre les parties radialement externe 8 et interne 6.

La partie radialement interne 6 comporte des trous 9, répartis régulièrement en cercle, de passage de vis 10 de fixation sur l'arbre moteur 4.

La partie radialement interne 6 est plus épaisse que la partie intermédiaire 7 et a une épaisseur 11 d'environ 5 mm.

La partie intermédiaire 7 a une épaisseur 12 comprise entre 1 et 5 mm environ et qui diminue progressivement en s'éloignant de l'axe de rotation 4. La partie intermédiaire 7 est reliée aux parties radialement interne 6 et externe 8 par des rayons de raccordement 13, qui peuvent être des arcs de cercle, mais qui sont de préférence elliptiques, et qui sont déterminés de manière à ce que les gradients de variation de contraintes soient sensiblement constants dans les zones de raccordement.

La partie radialement externe 8 est formée d'une part d'une partie annulaire radiale 14 plus épaisse que la partie intermédiaire 7 et qui porte du côté opposé à l'arbre moteur 4 la masse annulaire d'inertie 3, et d'autre part d'une partie cylindrique 15 à section circulaire s'étendant axialement depuis la périphérie radialement externe 16 de la partie annulaire 14 du côté opposé à l'arbre moteur 4.

La partie annulaire 14 comporte des trous 17, répartis régulièrement en cercle, de passage de rivets 18 de fixation de la masse d'inertie sur la tôle annulaire 2. Chaque trou 17 de passage d'un rivet 18 comporte un lamage 19 à l'intérieur duquel est logé la tête 20 du rivet 18. Dans ce premier mode de réalisation de l'invention, la masse annulaire d'inertie 3 est composée de plusieurs et par exemple trois rondelles indépendantes 22 identiques s'emboîtant axialement les unes dans les autres. La première de ces rondelles indépendantes 22 en contact avec la tôle annulaire flexible 2 est emboîtée dans celle-ci par une liaison de type mâle-femelle 23, la partie femelle 24 de cette liaison étant formée dans la tôle annulaire flexible 2 par un trou débouchant. Les rondelles indépendantes 22 contactent la surface radialement interne 25 de la partie cylindrique 15 de la partie radialement externe 8. La partie annulaire 14 portant la masse annulaire d'inertie 3 a une épaisseur d'environ 10 mm.

A l'intersection de la partie annulaire 14 et de la partie cylindrique 15 est formée une rainure annulaire 26 ouverte axialement du côté de l'arbre moteur 4 et radialement du côté opposé à l'axe de rotation 5. Dans cette rainure 26 est fixé une couronne de démarreur 27.

Dans une variante de l'invention, la masse annulaire d'inertie 3 est réalisée en un seul élément annulaire. Dans une autre variante, la masse annulaire 3 est formée de masselottes sensiblement juxtaposées sur une circonférence de la périphérie de la tôle annulaire flexible.

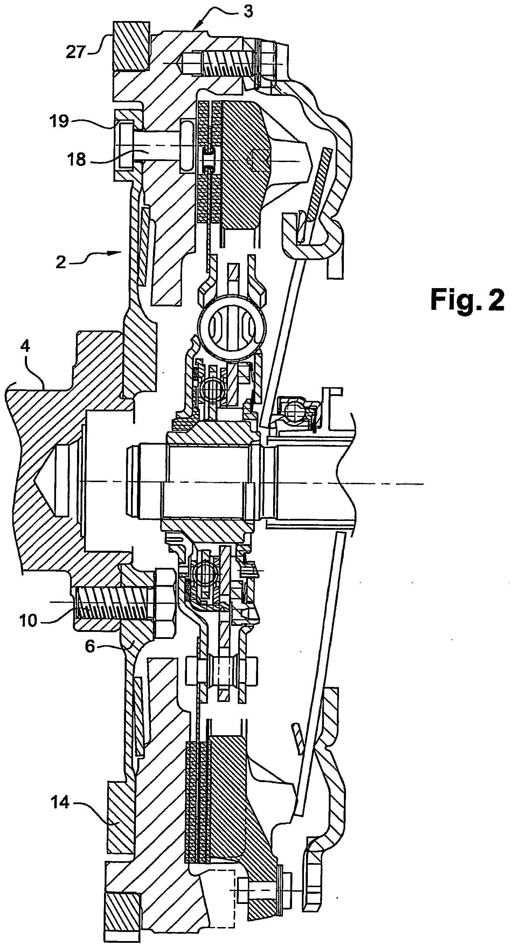

Dans la variante de réalisation de la figure 2, la masse annulaire 3 fixée sur la tôle annulaire flexible est d'une seule pièce et porte en périphérie la couronne de démarreur 27. Les têtes des rivets 18 de fixation de la masse annulaire 3 sont logées dans des lamages 19 relativement profonds de la partie annulaire 14 de la tôle flexible 2 et sont en appui sur une partie relativement mince de la tôle 2. L'épaisseur relativement importante de la partie annulaire 14 autour des lamages 19 assure une bonne répartition de la pression de serrage de chaque rivet 18. On peut ainsi fixer la masse annulaire 3 sur la tôle flexible 2 au moyen de rivets, au lieu d'utiliser des vis de fixation qui assurent un bon serrage, mais qui sont plus coûteuses en raison du taraudage des trous qui les reçoivent.

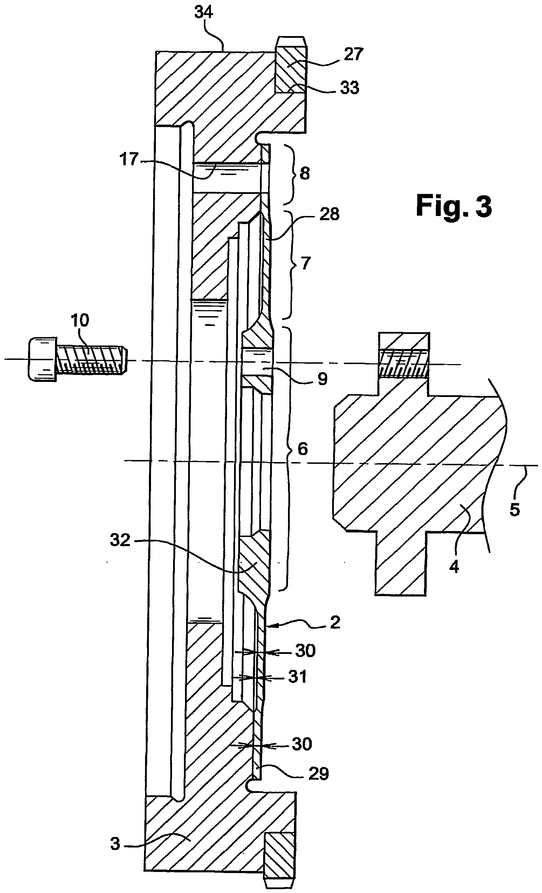

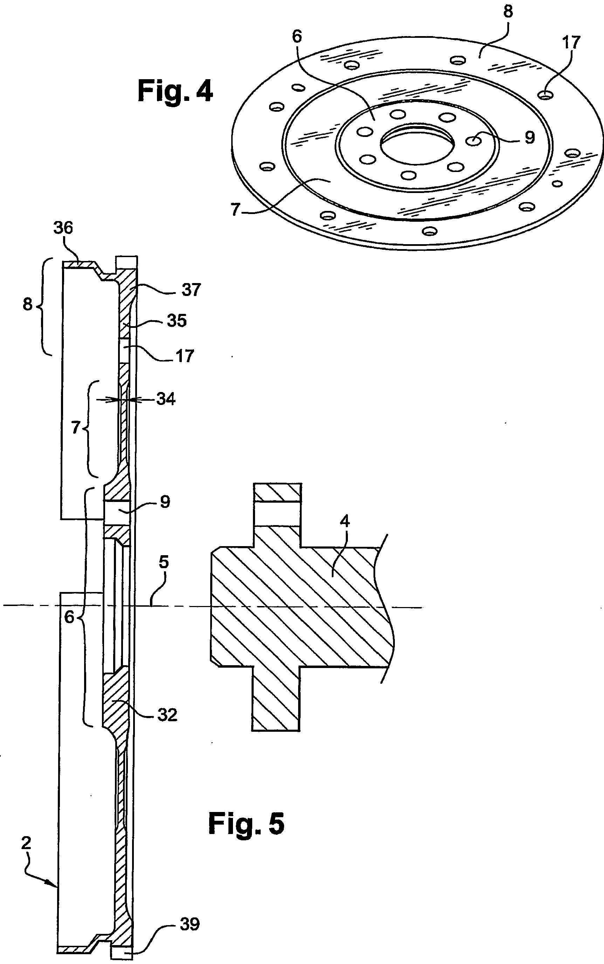

On se réfère maintenant aux figures 3 et 4 qui représentent une autre variante de réalisation de la tôle annulaire flexible 2 selon l'invention. La partie intermédiaire 7 et la partie radialement externe 8 de la tôle annulaire flexible 2 sont formées par deux anneaux 28, 29 de même épaisseur 30 comprise entre 1 et 5 mm environ et de préférence entre 2 et 4 mm environ. L'anneau 29, formant la partie radialement externe 8 et portant la masse annulaire 3, est décalé axialement, du côté opposé à l'arbre moteur 4, par rapport à l'anneau 28 formant la partie intermédiaire 7et le décalage axial 31 est inférieur à 3 mm environ.

La partie annulaire radialement interne 6 est plus épaisse que les autres parties 7, 8 de la tôle annulaire flexible 2 et forme un anneau épais 32 qui s'étend axialement de part et d'autre de l'anneau 28 formant la partie intermédiaire 7. L'anneau épais 32 joue le rôle d'une cale annulaire de serrage comportant les trous 9 de passage des vis 10 de fixation sur l'arbre moteur 4 et est destiné à répartir et supporter les efforts de serrage exercés par les têtes des vis 10 de fixation.

La couronne de démarreur 27 est fixée dans une rainure annulaire 33 de la périphérie radialement externe 34 de la masse annulaire 3.

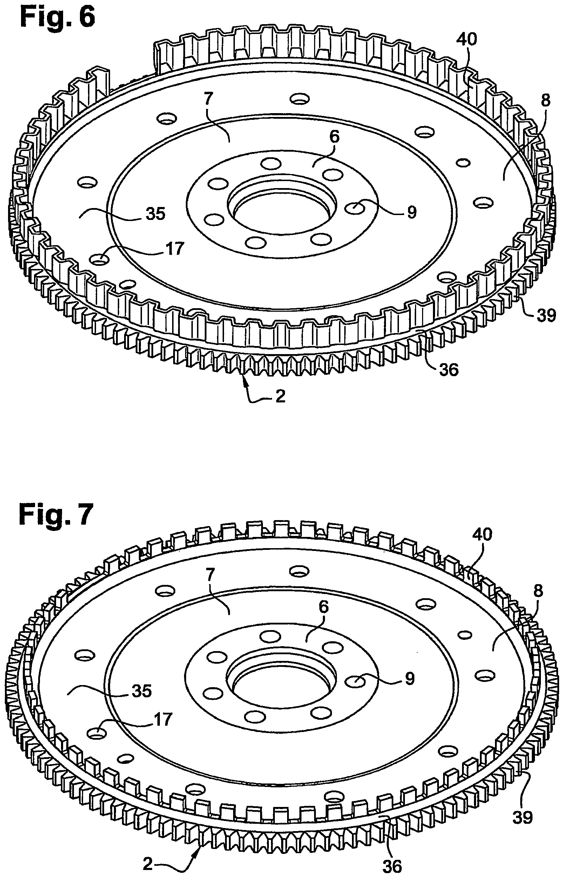

On se réfère maintenant aux figures 5 et 6 qui représentent une autre variante de réalisation de la tôle annulaire flexible 2, dans laquelle la partie radialement interne 6 de la tôle annulaire 2 forme une cale annulaire de serrage 32 et la partie intermédiaire 7 a une épaisseur 34 constante inférieure à celle des autres parties 6, 8 de la tôle annulaire flexible 2. La partie radialement externe 8 est formée :
- d'une part d'un anneau 35 destiné à porter une masse annulaire 3 (voir figure 2) et comportant des trous 17 de passages de vis ou de rivets de fixation de la masse annulaire 3 sur la tôle flexible 2,
- et d'autre part d'un rebord cylindrique externe 36 s'étendant axialement depuis la périphérie radialement externe 37 de l'anneau 35 destiné à porter la masse annulaire 3 et du côté opposé à l'arbre moteur 4.

L'anneau 35 de la partie radialement externe 8 est plus épais que la partie intermédiaire 7 et comporte sur sa périphérie radialement externe une couronne dentée de démarreur 39 formée par usinage de la périphérie de l'anneau 35. Le rebord cylindrique 36 est soumis à un fluotournage pour former des cibles d'allumage 40 comme représenté en figure 6. Plus précisément, la surface externe des cibles d'allumage 40 peut être obtenue directement par fluotournage, la matière du rebord 36 étant repoussée au moyen d'une molette dentée dans les cavités d'une matrice appropriée. Quelques dents 40 sont ensuite supprimées par découpe pour définir une position angulaire initiale.

La figure 7 représente une variante de réalisation de la tôle annulaire flexible 2 dans laquelle les cibles d'allumage 40 sont formées par usinage (découpe) dans un rebord cylindrique 36 plus épais, de même que les dents de la couronne de démarreur 39, alors que le reste du volant est réalisé par fluotournage.

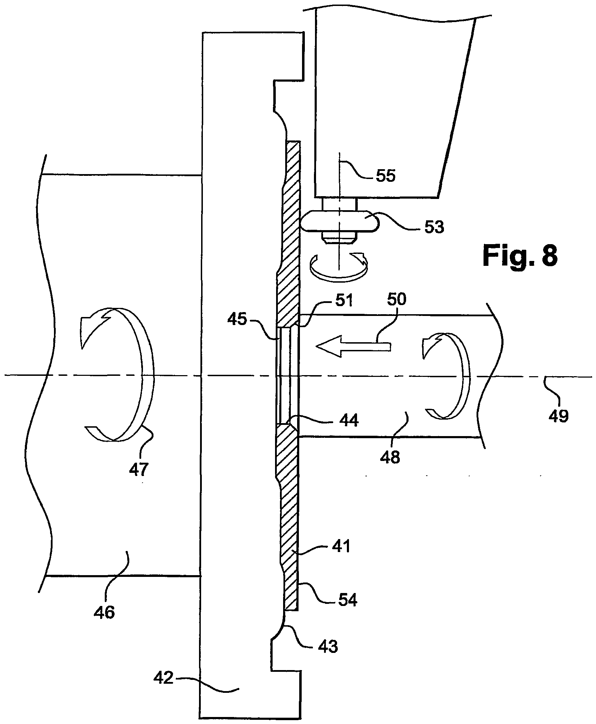

Les figures 8 à 10 représentent trois étapes successives de la formation par fluotournage d'une tôle annulaire flexible 2. Le fluotournage de la tôle annulaire flexible 2 s'effectue par déformation plastique de la matière à l'état solide, à partir d'un anneau plat 41 comme représenté en figure 8. L'anneau plat 41 est placé en appui axial sur une matrice 42 en forme de disque. La surface radiale 43 de la matrice 42 du côté de l'anneau plat 41 donne la forme mère (figure 8) de la tôle annulaire flexible 2. L'ouverture cylindrique centrale 44 de l'anneau plat 41 permet de centrer celui-ci sur un pion de centrage cylindrique 45 s'étendant axialement depuis la matrice 42 du côté de l'anneau plat 41. La matrice 42 est fixée sur le mandrin 46 d'un tour de fluotournage pour être entraînée en rotation comme indiqué par la flèche 47 autour de l'axe de rotation 49 du mandrin 46. L'anneau plat 41 est bridé axialement sur la matrice disque 42. Le bridage axial de l'anneau plat 41 est assuré par une poupée mobile 48, coaxiale au mandrin 46, qui exerce une force axiale 50 sur l'anneau plat 41 au voisinage de sa périphérie radialement interne 53. La poupée mobile 48 est libre en rotation pour également être entraînée en rotation par le mandrin 46.

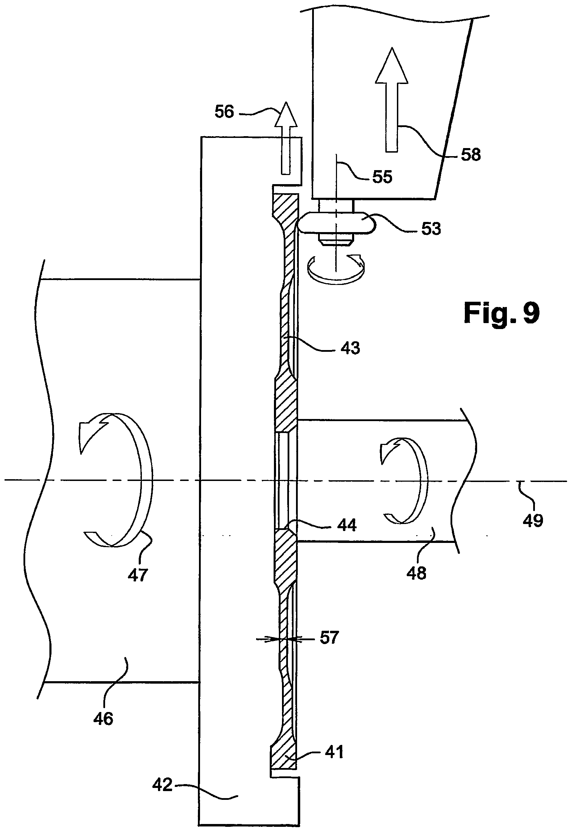

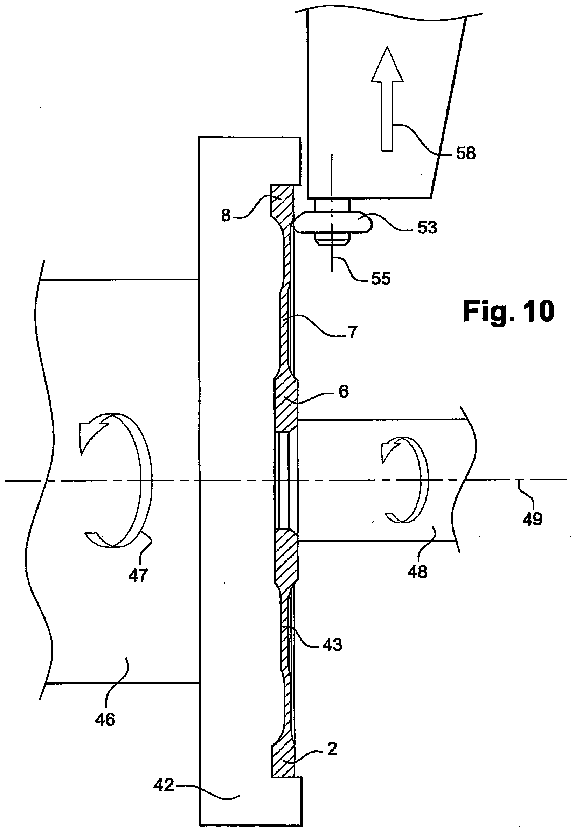

Lorsque l'anneau plat 41, bridé contre la matrice 42, est entraîné en rotation, au moins une molette 53 qui est généralement en acier trempé est appliquée contre la face radiale 54 de l'anneau plat 41 du côté opposé à la matrice 42. La molette 53 est libre en rotation autour d'un axe 55 perpendiculaire à l'axe de rotation 49 du mandrin 46. A chaque passe de fluotournage (figure 9) la molette 53, tout en exerçant une pression importante sur la matière constitutive de l'anneau plat 41, est déplacée dans une direction radiale en s'éloignant de l'axe de rotation 49 du mandrin 4 comme indiqué par la flèche 58. L'anneau plat 41 est ainsi étiré dans une direction radiale opposée à l'axe de rotation 49 du mandrin 46 comme indiqué par la flèche 56. Cet étirement radial de l'anneau plat 41 est accompagné d'un amincissement 57 contrôlé de cet anneau 41 permettant d'obtenir finalement des tôles flexibles 2 (figure 10) comportant des parties annulaires épaisses 6 et 8 et des parties annulaires minces 7. La pression exercée par la molette 53 sur l'anneau plat 41 pour l'étirer et l'amincir provoque un écrouissage de l'anneau plat 41 pour augmenter les caractéristiques mécaniques et notamment la dureté en surface de la pièce finale, c'est-à-dire, de la tôle annulaire flexible 2.

## Revendications

1. Volant flexible pour un dispositif de transmission de couple, en particulier pour véhicule automobile, ce volant (1) comprenant une masse annulaire (3) portée par une partie annulaire radialement externe (8) d'une tôle annulaire flexible (2) dont une partie annulaire radialement interne (6) comporte des trous (9) de passage de vis (10) de fixation sur un arbre moteur (4), **caractérisé en ce que** la tôle annulaire flexible (2) est une pièce réalisée par fluotournage et a une épaisseur variable en direction radiale.

2. Volant selon la revendication 1, **caractérisé en ce que** la tôle annulaire flexible (2) comporte une zone annulaire flexible (7) de plus faible épaisseur formée entre la partie annulaire radicalement interne (6) et la partie annulaire radialement externe (8) de la tôle annulaire flexible (2).

3. Volant selon la révendication2, **caractérisé en ce que** la zone annulaire flexible (7) a une épaisseur variable comprise entre 1 et 5 mm environ.

4. Volant selon la revendication 2 ou3, **caractérisé en ce que** la zone annulaire flexible (7) a une épaisseur progressivement croissante depuis sa périphérie radialement externe vers sa périphérie radialement interne.

5. Volant selon l'une des revendications 2 à4, **caractérisé en ce que** la partie annulaire radialement interne (6) est plus épaisse que la zone annulaire intermédiaire (7) pour former une cale annulaire de serrage des vis de fixation (10).

6. Volant selon la revendication, **caractérisé en ce que** l'épaisseur de la cale annulaire de serrage (6) est de 5 à 10 mm environ.

7. Volant selon l'une des revendications précédente, **caractérisé en ce qu'**une couronne dentée de démarreur (39) est formée par usinage de la périphérie radialement externe (37) de la tôle annulaire flexible, (2).

8. Volant selon la revendication 7, **caractérisé en ce que** la partie de la tôle annulaires flexible (2) formant la couronne de démarreur (39) a une épaisseur d'environ 10 mm.

9. Volant selon l'une des revendications précédentes, **caractérisé en ce qu'**un rebord cylindrique portant des cibles d'allumage (40) est formé de fabrication par fluotournage sur la tôle annulaire flexible (2) à sa périphérie radicalement externe.

10. Volant selon l'une des revendications 1 à 6, **caractérisé en ce qu'**une couronne de démarreur indépendante (27) est fixée sur la périphérie radialement externe (16) de la tôle annulaire flexible (2).

11. Volant selon la revendication 10, **caractérisé en ce que** la partie de la tôle annulaire flexible (2) portant la couronne de démarreur (27) a une épaisseur d'environ 2 mm sous les têtes des rivets de fixation.

12. Volant selon l'une des revendications précédentes, **caractérisé en ce que** la masse annulaire (3) est formée d'une seule pièce avec la tôle annulaire flexible (2) ou comprend au moins une rondelle ou des masselottes rapportées et fixées sur la tôle annulaire flexible (2).

13. Volant selon l'une des revendications précédentes, **caractérisé en ce que** la masse annulaire (3) est fixée par des rivets (18) sur la tôle annulaire flexible (2).

14. Volant selon la revendication 13, **caractérisé en ce que** la partie de la tôle annulaire flexible (2) portant la masse annulaire (3) a une épaisseur d'environ 2 mm sous les têtes des rivets.

15. Volant selon l'une des revendications précédentes, **caractérisé en ce que** la tôle annulaire flexible (2) comporte des rayons de raccordement (13) entre ses parties (6, 7, 8) d'épaisseurs différentes.

## Claims

1. Flexible flywheel for a torque transmission device, in particular for a motor vehicle, this flywheel (1) comprising an annular mass (3) which is supported by a radially outer annular part (8) of a flexible annular plate (2), a radially inner annular part (6) of which comprises holes (9) for passage of screws (10) for securing onto a drive shaft (4), **characterised in that** the flexible annular plate (2) is a part produced by means of flow turning, and has a thickness which is variable in the radial direction.

2. Flywheel according to claim 1, **characterised in that** the flexible annular plate (2) comprises a thinner flexible annular area (7) which is formed between the radially inner annular part (6) and the radially outer annular part (8) of the flexible annular plate (2).

3. Flywheel according to claim 2, **characterised in that** the flexible annular area (7) has a variable thickness of between approximately 1 and 5 mm.

4. Flywheel according to claim 2 or 3, **characterised in that** the flexible annular area (7) has a thickness which increases progressively from its radially outer periphery towards its radially inner periphery.

5. Flywheel according to one of claims 2 to 4, **characterised in that** the radially inner annular part (6) is thicker than the intermediate annular area (7), in order to form an annular wedge for clamping of the securing screws (10).

6. Flywheel according to claim 5, **characterised in that** the thickness of the annular clamping wedge (6) is approximately 5 to 10 mm.

7. Flywheel according to one of the preceding claims, **characterised in that** a toothed starter ring (39) is formed by machining of the radially outer periphery (37) of the flexible annular plate (2).

8. Flywheel according to claim 7, **characterised in that** the part of the flexible annular plate (2) which forms the starter ring (39) has a thickness of approximately 10 mm.

9. Flywheel according to one of the preceding claims, **characterised in that** a cylindrical rim which bears ignition targets (40) is manufactured by flow turning on the flexible annular plate (2), on its radially outer periphery.

10. Flywheel according to one of claims 1 to 6, **characterised in that** an independent starter ring (27) is secured on the radially outer periphery (16) of the flexible annular plate (2).

11. Flywheel according to claim 10, **characterised in that** part of the flexible annular plate (2) which bears the starter ring (27) has a thickness of approximately 2 mm below the heads of the securing rivets.

12. Flywheel according to one of the preceding claims, **characterised in that** the annular mass (3) is formed integrally with the flexible annular plate (2), or it comprises at least one washer or risers which are added on and secured to the flexible annular plate (2).

13. Flywheel according to one of the preceding claims, **characterised in that** the annular mass (3) is secured by rivets (18) to the flexible annular plate (2),

14. Flywheel according to claim 13, **characterised in that** the part of the flexible annular plate (2) which bears the annular mass (3) has a thickness of approximately 2 mm below the heads of the rivets.

15. Flywheel according to one of the preceding claims, **characterised in that** the flexible annular plate (2) comprises radii of connection (13) between its parts (6, 7, 8) with different thicknesses.

## Patentansprüche

1. Flexibles Schwungrad für eine Drehmomentübertragungsvorrichtung, insbesondere für Kraftfahrzeuge, wobei das Schwungrad (1) eine ringförmige Masse (3) umfasst, die von einem radial äußeren ringförmigen Teil (8) eines ringförmigen flexiblen Blechs (2) getragen ist, von dem ein radial innerer ringförmiger Teil (6) Löcher (9) für den Durchgang von Schrauben (10) zur Befestigung an einer Motorwelle (4) aufweist, **dadurch gekennzeichnet, dass** das ringförmige flexible Blech (2) ein durch Drückwalzen hergestelltes Teil ist und eine in radialer Richtung variable Dicke hat.

2. Schwungrad nach Anspruch 1, **dadurch gekennzeichnet, dass** das ringförmige flexible Blech (2) eine ringförmige flexible Zone (7) von geringerer Dicke aufweist, die zwischen dem radial inneren ringförmigen Teil (6) und dem radial äußeren ringförmigen Teil (8) des ringförmigen flexiblen Blechs (2) liegt.

3. Schwungrad nach Anspruch 2, **dadurch gekennzeichnet, dass** die ringförmige flexible Zone (7) eine variable Dicke hat, die ungefähr zwischen 1 und 5 mm liegt.

4. Schwungrad nach Anspruch 2 oder 3, **dadurch gekennzeichnet, dass** die ringförmige flexible Zone (7) eine von ihrem radial äußeren Umfang in Richtung zu ihrem radial inneren Umfang fortschreitend zunehmende Dicke hat.

5. Schwungrad nach einem der Ansprüche 2 bis 4, **dadurch gekennzeichnet, dass** der radial innere ringförmige Teil (6) dicker ist als die mittlere ringförmige Zone (7), um eine ringförmige Unterlage zum Festziehen der Befestigungsschrauben (10) zu bilden.

6. Schwungrad nach Anspruch 5, **dadurch gekennzeichnet, dass** die Dicke der ringförmigen Unterlage (6) zum Festziehen ungefähr zwischen 5 und 10 mm beträgt.

7. Schwungrad nach einem der vorangehenden Ansprüche, **dadurch gekennzeichnet, dass** ein Anlasserzahnkranz (39) durch spanende Bearbeitung des radial äußeren Umfangs (37) des ringförmigen flexiblen Blechs (2) ausgeformt ist.

8. Schwungrad nach Anspruch 7, **dadurch gekennzeichnet, dass** der den Anlasserkranz (39) bildende Teil des ringförmigen flexiblen Blechs (2) eine Dicke von ungefähr 10 mm hat.

9. Schwungrad nach einem der vorangehenden Ansprüche, **dadurch gekennzeichnet, dass** ein Zündmarken (40) aufweisender zylindrischer Rand auf dem ringförmigen flexiblen Blech (2) an seinem radial äußeren Unfang durch Drückwalzen ausgeformt ist.

10. Schwungrad nach einem der Ansprüche 1 bis 6, **dadurch gekennzeichnet, dass** ein unabhängiger Anlasserkranz (27) am radial äußeren Unfang des ringförmigen flexiblen Blechs (2) befestigt ist.

11. Schwungrad nach Anspruch 10, **dadurch gekennzeichnet, dass** der den Anlasserkranz (27) tragende Teil des ringförmigen flexiblen Blechs (2) eine Dicke von ungefähr 2 mm unter den Köpfen der Befestigungsniete hat.

12. Schwungrad nach einem der vorangehenden Ansprüche, **dadurch gekennzeichnet, dass** die ringförmige Masse (3) einstückig mit dem ringförmigen flexiblen Blech (2) ausgebildet ist oder zumindest eine Scheibe oder angebaute Masseelemente umfasst, die auf dem ringförmigen flexiblen Blech (2) befestigt sind.

13. Schwungrad nach einem der vorangehenden Ansprüche, **dadurch gekennzeichnet, dass** die ringförmige Masse (3) durch Niete (18) an dem ringförmigen flexiblen Blech (2) befestigt ist.

14. Schwungrad nach Anspruch 13, **dadurch gekennzeichnet, dass** der die ringförmige Masse (3) tragende Teil des ringförmigen flexiblen Blechs (2) eine Dicke von ungefähr 2 mm unter den Köpfen der Niete hat.

15. Schwungrad nach einem der vorangehenden Ansprüche, **dadurch gekennzeichnet, dass** das ringförmige flexible Blech (2) zwischen seinen Teilen (6, 7, 8) mit unterschiedlicher Dicke Anschlussradien (13) aufweist.
